# FASCICULE DE BREVET EUROPEEN

(11) **EP 1 768 535 B1**
(45) Date de publication et mention de la délivrance du brevet: **14.07.2010**
(21) Numéro de dépôt: 05775473.1
(22) Date de dépôt: 08.06.2005
(51) Int. Cl.: A47J 37/04, A47J 39/00

(54) **APPAREIL DE CUISSON A FLUX D'AIR**
LUFTSTROMKOCHVORRICHTUNG
AIR FLOW COOKING DEVICE

(30) Priorité: 08.06.2004 FR 0406214; 08.06.2004 FR 0406220
(43) Date de publication de la demande: 04.04.2007
(73) Titulaire: SEB S.A., 69132 Ecully Cedex (FR)
(72) Inventeur: PAYEN, Jean-Marc, 21800 Quetigny (FR); BIZARD, Jean-Claude, 21121 Fontaine les Dijon (FR)
(74) Mandataire: Martin, Didier Roland Valéry
(86) Numéro de dépôt international: PCT/FR2005/001416
(87) Numéro de publication internationale: WO 2006/000700

(56) Documents cités:
- DE-A1- 2 102 062
- DE-U1- 20 214 744
- US-A- 4 728 762
- US-A- 5 445 073

## Description

### DOMAINE TECHNIQUE

La présente invention se rapporte au domaine technique général des appareils conçus pour cuire et/ou réchauffer des aliments, en particulier en vrac, et se rapporte notamment au domaine des appareils conçus pour cuire et/ou réchauffer des aliments en présence de matière grasse.

La présente invention concerne plus particulièrement un appareil domestique de cuisson et/ou de chauffage d'aliments comprenant d'une part un moyen de réception d'aliments en vrac et d'autre part un moyen de chauffe desdits aliments en vrac comportant un moyen de génération d'un flux d'air.

### TECHNIQUE ANTERIEURE

On connaît déjà, dans l'art antérieur, des appareils mettant en oeuvre un flux d'air pour chauffer ou cuire des aliments.

Un tel appareil est connu du document US-A-4728762.

Ces appareils connus sont ainsi pourvus d'un ventilateur qui souffle un courant d'air chaud sur les aliments à cuire, lesquels sont disposés sur une grille au sein d'un boîtier.

Ces dispositifs de l'art antérieur sont spécialement conçus pour que le flux d'air se déplace à l'intérieur du boîtier selon une forme d'hélice cyclonique, afin de favoriser l'échange thermique entre les aliments et le flux d'air.

La mise en oeuvre d'un tel flux cyclonique suppose toutefois une construction relativement complexe de l'appareil, afin de permettre des passages d'air autour des aliments, tout en nécessitant un ventilateur de forte puissance, disposé de manière relativement encombrante et inesthétique sur le couvercle de l'appareil.

Ces appareils de l'art antérieur, qui s'apparentent à des fours, ne permettent également pas d'assurer la cuisson ou le réchauffage d'aliments avec un milieu de cuisson liquide, comme par exemple une légère quantité d'huile.

En particulier, ces appareils connus, outre la relative complexité de la cinématique de flux d'air qu'ils mettent en oeuvre, ne permettent pas véritablement de réunir, d'un point de vue thermique notamment, les conditions propres à assurer le déroulement d'une réaction de Maillard suffisante pour obtenir des aliments présentant les mêmes qualités gustatives que s'ils avaient été frits dans un bain d'huile.

Il est par ailleurs bien connu, dans l'art antérieur, de frire des aliments, tels que des morceaux de pommes de terre, à l'aide d'une friteuse électrique domestique.

De manière classique, une telle friteuse électrique domestique comprend d'une part une cuve destinée à être remplie d'huile ou de matière grasse, et d'autre part des résistances chauffantes permettant de chauffer le contenu de la cuve.

Les friteuses électriques connues permettent ainsi de réaliser un bain d'huile ou de matière grasse fondue à haute température dans lequel on plonge les aliments à frire par l'intermédiaire d'un panier de cuisson.

Ce mode de friture classique par immersion dans un bain d'huile chaude, s'il donne généralement satisfaction du point de vue gustatif, présente toutefois de nombreux inconvénients.

En premier lieu, ces friteuses classiques mettent en oeuvre, pour réaliser le bain de cuisson, une quantité importante d'huile. Cela implique des difficultés de manipulation pour l'utilisateur lorsqu'il remplit sa friteuse, lorsqu'il la déplace et surtout lorsqu'il la vide.

Ce bain de cuisson à haute température est également source de risque de brûlures, que ce soit par projections hors de la cuve de l'appareil ou par suite d'une maladresse de l'utilisateur (renversement de l'appareil). Ce risque de brûlures ou d'accidents est accru par le fait qu'une quantité aussi importante d'huile nécessite, avant d'introduire les aliments dans la cuve pour les frire, une phase de préchauffage relativement longue. Cela peut conduire l'utilisateur à oublier son bain d'huile en phase de préchauffe, avec toutes les conséquences néfastes que cette absence de surveillance pourrait engendrer.

Par ailleurs, ces friteuses connues s'avèrent d'un usage relativement coûteux, puisqu'elles nécessitent l'achat régulier d'une grande quantité d'huile (au minimum 1,5 à 2 L d'huile sont en effet généralement nécessaires pour frire 1 Kg de morceaux de pommes de terre fraîches). L'utilisateur est donc naturellement conduit à économiser l'huile en réutilisant plusieurs fois le même bain de cuisson, ce qui est peu satisfaisant du point de vue de l'hygiène et du goût. De plus, l'utilisateur peut réutiliser un bain de cuisson, alors que celui-ci s'est dégradé, ce qui peut être néfaste pour la santé. Par ailleurs, la mise au rebut de l'huile usagée peut poser de sérieux problèmes d'atteinte à l'environnement.

Enfin, le chauffage à haute température d'une telle quantité d'huile provoque d'une part des dégagements d'odeurs qui peuvent s'avérer particulièrement désagréables, et d'autre part une polymérisation de l'huile qui rend le nettoyage de l'appareil difficile et contraignant.

### EXPOSE DE L'INVENTION

L'objet assigné à l'invention vise en conséquence à porter remède aux différents inconvénients énumérés précédemment et à proposer un nouvel appareil de cuisson et/ou de chauffage d'aliments qui, tout en étant de conception très simple, permet d'assurer un chauffage et/ou une cuisson particulièrement efficace et homogène des aliments, et en particulier permet d'obtenir lorsque cela est souhaité un résultat sensiblement proche de la friture sans pour autant mettre en oeuvre une quantité d'huile importante.

Un autre objet de l'invention vise à proposer un nouvel appareil de cuisson et/ou de chauffage d'aliments permettant un échange thermique particulièrement efficace avec les aliments à chauffer et/ou à cuire.

Un autre objet de l'invention vise à proposer un nouvel appareil de cuisson et/ou de chauffage d'aliments de construction particulièrement simple et bon marché.

Un autre objet de l'invention vise à proposer un nouvel appareil de cuisson et/ou de chauffage d'aliments mettant en oeuvre un minimum de composants.

Un autre objet de l'invention vise à proposer un nouvel appareil de cuisson et/ou de chauffage d'aliments qui permette d'obtenir un excellent échange thermique avec les aliments à l'aide d'un minimum d'éléments.

Un autre objet de l'invention vise à proposer un nouvel appareil de cuisson et/ou de chauffage d'aliments dont la compacité et l'encombrement sont optimisés.

Un autre objet de l'invention vise à proposer un nouvel appareil de cuisson et/ou de chauffage d'aliments permettant un chauffage et/ou une cuisson des aliments particulièrement rapide.

Un autre objet de l'invention vise à proposer un nouvel appareil de cuisson et/ou de chauffage d'aliments qui permette d'assurer une circulation d'air répartie de manière extrêmement efficace à l'aide d'un minimum de moyens.

Un autre objet de l'invention vise à proposer un nouvel appareil de cuisson et/ou de chauffage d'aliments qui permette un chauffage et/ou une cuisson particulièrement homogène des aliments.

Un autre objet de l'invention vise à proposer un nouvel appareil de cuisson et/ou de chauffage d'aliments qui permette d'obtenir des aliments sensiblement similaires à des aliments frits, sans qu'il ne soit nécessaire de plonger les aliments dans un bain de matière grasse brûlante.

Les objets assignés à l'invention sont atteints à l'aide d'un appareil domestique de cuisson et/ou de chauffage d'aliments selon la revendication 1.

### DESCRIPTIF SOMMAIRE DES DESSINS

D'autres particularités et avantages de l'invention apparaîtront et ressortiront plus en détails à la lecture de la description faite ci-après, en référence aux dessins annexés, donnés à titre purement illustratifs et non limitatifs, dans lesquels :
- La figure 1 illustre, selon une vue générale en perspective, un appareil de cuisson conforme à un premier mode de réalisation de l'invention.
- La figure 2 illustre, selon une vue latérale en coupe médiane, l'appareil de cuisson de la figure 1.
- La figure 3 illustre, selon une vue latérale en coupe, un appareil de cuisson conforme à un second mode de réalisation.
- La figure 4 illustre, selon une vue écorchée en perspective, un détail de réalisation de l'appareil de cuisson de la figure 3.
- La figure 5 illustre, selon une vue latérale schématique, un détail de réalisation de l'appareil des figures 3 et 4.

### MEILLEURE MANIERE DE REALISER L'INVENTION

L'invention concerne un appareil 1 de cuisson et/ou de chauffage d'aliments destinés à la consommation humaine.

Conformément à l'invention, l'appareil 1 est un appareil domestique, c'est-à-dire spécifiquement conçu et dimensionné pour un usage domestique, par exemple dans le cadre familial. A ce titre, l'appareil 1 peut être manipulé à la main par son utilisateur, par exemple pour être déplacé d'un placard à un plan de travail. En d'autres termes, l'appareil 1 présente préférentiellement un caractère portable.

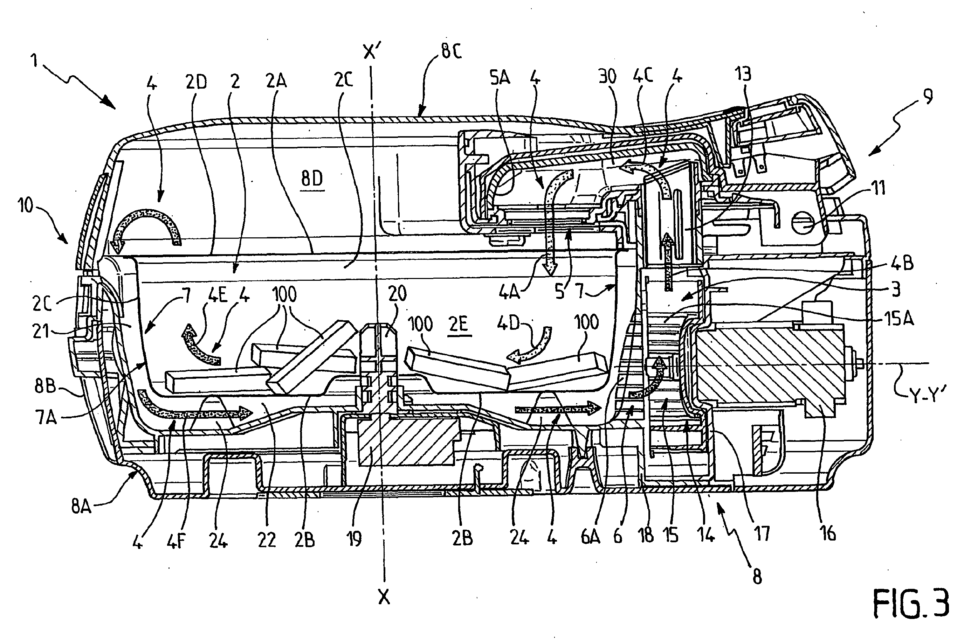

L'appareil 1 conforme à l'invention est préférentiellement conçu et dimensionné pour cuire et/ou chauffer des aliments particulaires 100 (cf. figure 3), tels que des morceaux de pommes de terre. Ces aliments 100 peuvent avoir été coupés manuellement par l'utilisateur, ou avoir été achetés déjà préparés dans le commerce, à l'état pré-frit et/ou surgelé par exemple.

Selon le cas, l'appareil 1 sera ainsi employé à véritablement cuire les aliments (cas où les aliments sont crus) ou simplement les chauffer (cas d'aliments déjà partiellement ou entièrement cuits).

Comme on le verra plus en détails ci-après, le concept général à la base de l'invention autorise une grande polyvalence en matière de modes de cuisson, de sorte que le terme « *cuire* » employé ici recouvre différents modes de traitement des aliments, comme par exemple la friture, le rissolage, le rôtissage, ou le brunissage.

Dans une variante préférentielle de réalisation, qui correspond aux exemples illustrés aux figures, l'appareil 1 conforme à l'invention est préférentiellement conçu et dimensionné pour assurer un traitement thermique des aliments destinés à leur conférer des qualités gustatives sensiblement équivalentes ou proches à celles d'aliments frits, et notamment d'aliments frits dans un bain d'huile.

Dans cette variante, l'appareil 1 conforme à l'invention constitue donc une friteuse, et plus particulièrement une friteuse à cuisson sèche.

Par « *cuisson sèche* », on désigne ici un mode de cuisson d'aliments sans immersion de ces derniers dans un bain d'huile ou de matière grasse, que cette immersion soit partielle et/ou temporaire pendant le cycle de cuisson. L'expression « *cuisson sèche* » désigne au contraire une cuisson dans laquelle les aliments sont certes « *mouillés* » par un médium de cuisson (huile par exemple), mais sans pour autant être plongés ou baigner dans ledit médium. En cela, le principe de fonctionnement de la friteuse conforme à l'invention diffère de celui d'une friteuse classique à bain d'huile, puisqu'il permet en particulier de réunir des conditions propres à l'établissement d'une réaction de Maillard suffisante pour conférer aux aliments le caractère doré et craquant propre aux aliments frits sans que lesdits aliments n'aient pour autant été plongés complètement et directement dans un bain d'huile brûlante.

Dans ce qui suit, on s'intéressera exclusivement, pour des raisons de simplicité de description, à un appareil 1 conforme à l'invention formant une telle friteuse à cuisson sèche, étant entendu que d'autres modes de cuisson sont envisageables avec l'appareil 1 conforme à l'invention, ainsi qu'on l'a envisagé précédemment.

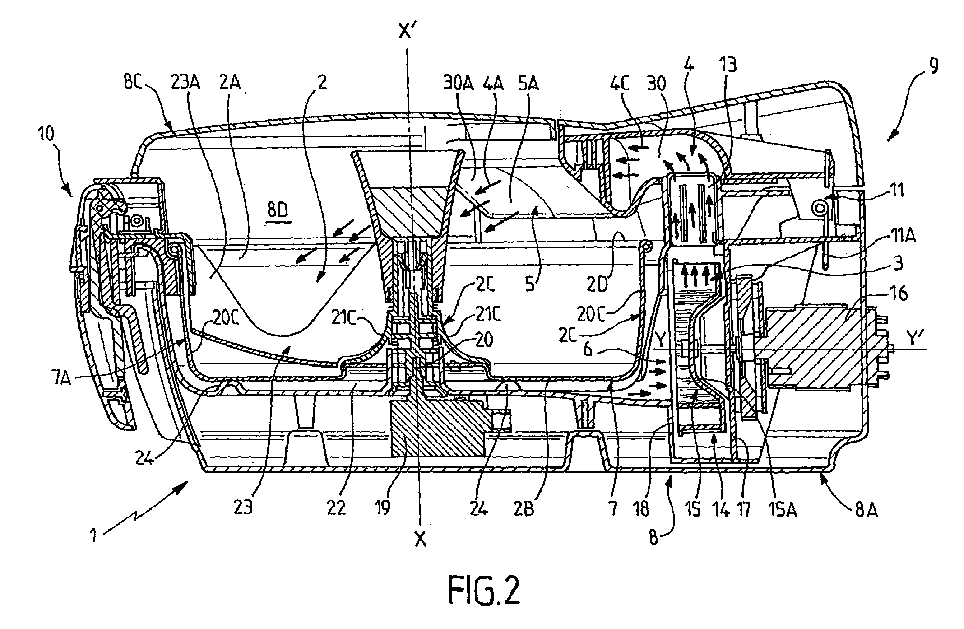

La friteuse 1 conforme à l'invention comprend un moyen de réception 2 d'aliments 100 en vrac (cf. figure 2).

En d'autres termes, le moyen de réception 2 est conçu pour accueillir des aliments se présentant sous forme « *brute* », c'est-à-dire pêle-mêle, sans emballage, comme cela est d'ailleurs généralement le cas pour la plupart des moyens de réception d'aliments mis en oeuvre dans les appareils domestiques de cuisson.

Le moyen de réception 2 est ainsi capable d'assurer par lui-même une fonction de support et de maintien, dans une zone prédéterminée, des aliments 100, en particulier lorsque ces derniers se présentent sous forme particulaires, comme cela est le cas lorsque les aliments 100 sont constitués de morceaux de pommes de terre destinés à devenir des frites. Bien évidemment, la friteuse 1 conforme à l'invention n'est pas limitée à l'élaboration de pommes de terre frites, et peut être utilisée pour des fritures avec d'autres sortes d'aliments (viandes, poissons, légumes...) sans pour autant que l'on sorte du cadre de l'invention.

Ainsi, le moyen de réception 2 permet une utilisation très simple de l'appareil 1, puisqu'il suffit à l'utilisateur d'alimenter directement le moyen de réception 2 avec les aliments 100 en vrac, sans qu'il n'y ait nécessité de mettre en oeuvre des mesures particulières de groupage ou de sur-emballage des aliments 100, comme cela est parfois le cas dans des installations industrielles.

Conformément à l'invention, l'appareil 1 comprend également un moyen de chauffe des aliments en vrac 100, ledit moyen de chauffe étant destiné à assurer la cuisson et/ou le chauffage desdits aliments 100.

En d'autres termes, le moyen de chauffe visé précédemment constitue un moyen de chauffe principal, c'est-à-dire qu'il est susceptible d'assurer à lui seul au moins l'essentiel de l'apport thermique permettant la cuisson et/ou le chauffage recherché, ledit moyen de chauffe étant de préférence conçu et agencé pour assurer sensiblement la totalité dudit apport thermique.

Le moyen de chauffe comporte, conformément à l'invention, un moyen de génération 3 d'un flux d'air 4, qui est de préférence un moyen de génération 3 d'un flux d'air chaud 4 comme cela va être détaillé dans ce qui suit.

Le moyen de génération 3 du flux d'air 4 comprend une sortie d'air 5 à partir de laquelle de l'air est soufflé dans le moyen de réception 2. En d'autres termes, de l'air, et préférentiellement de l'air chaud 4A, est propulsé au sein même du moyen de réception 2, en vue d'opérer un échange thermique direct avec les aliments 100 disposés dans le moyen de réception 2.

De manière préférentielle, la sortie d'air 5 est agencée relativement au moyen de réception 2 de telle sorte que l'air chaud 4A soufflé à partir de ladite sortie d'air 5 est projeté directement sur les aliments en vrac 100 disposés au sein du moyen de réception 2.

Ainsi, la sortie d'air 5, formée de préférence par une tuyère d'éjection 5A, constitue le point de départ d'un tronçon de flux d'air 4A orienté de façon, à frapper sensiblement directement au moins une partie des aliments 100 disposés dans le moyen de réception 2, lequel forme ainsi une chambre de cuisson pour les aliments 100.

Au sens de l'invention, l'air chaud 4A soufflé au niveau de la sortie 5 est propulsé de manière positive, au contraire par exemple d'un simple effet de convection naturelle.

L'impact direct de l'air chaud 4A soufflé à partir de la sortie 5 directement sur les aliments 100 contribue à un excellent échange thermique avec lesdits aliments 100 en vue de réaliser leur cuisson.

Dans le cas où les aliments 100 en question sont enduits de matière grasse (par exemple d'huile), l'impact direct du faisceau d'air chaud 4A issu de la sortie 5 contribue à la réalisation d'une cuisson sensiblement équivalente, du point de vue du résultat, à celle qui aurait été obtenue si les aliments avaient été plongés dans un bain d'huile, mais bien évidemment sans les inconvénients liés à ce dernier mode de cuisson.

Conformément à l'invention, le moyen de génération 3 du flux d'air 4 comprend également une entrée d'air 6 au niveau de laquelle est réalisée une aspiration d'air pour établir le flux d'air 4 entre lesdites sortie 5 et entrée 6.

En d'autres termes, le flux d'air 4 généré par le moyen de génération 3 s'établit dans le sens de la sortie 5 vers l'entrée 6, laquelle entrée 6 aspire l'air au sein de l'appareil 1, et en particulier contribue à extraire l'air présent dans le moyen de réception 2 hors dudit moyen de réception 2.

Conformément à l'invention, il s'établit ainsi une circulation d'air entre la sortie 5 et l'entrée 6, circulation d'air qui présente un caractère forcé puisque l'éjection de l'air au niveau de la sortie 5 tout comme l'aspiration de l'air au niveau de l'entrée 6 sont effectuées de manière positive, à l'aide de moyens adéquats qui seront décrits plus en détails ci-après. En d'autres termes, l'appareil 1 conforme à l'invention est avantageusement pourvu de moyens positifs d'éjection d'air, qui sont préférentiellement des moyens d'éjection d'air chaud, et d'aspiration d'air. Cela signifie en particulier que l'entrée d'air 6, qui est préférentiellement formée par une ouïe d'aspiration 6A, ne forme pas un simple évent, mais bien une bouche de succion d'air.

L'entrée d'air 6 est distincte de la sortie d'air 5, et est située à distance de cette dernière.

Conformément à une caractéristique importante de l'invention, l'appareil 1 comprend un écran 7 agencé relativement à la sortie 5 et à l'entrée d'air 6 de manière à forcer le flux d'air 4 à effectuer un mouvement de contournement de l'écran 7 pour rejoindre l'entrée d'air 6 à partir du moyen de réception 2.

Ainsi, conformément à cette caractéristique technique, l'écran 7 est positionné dans le flux d'air 4 de telle manière que ledit flux d'air est contraint à faire le tour de l'écran 7 pour rejoindre l'entrée 6 à partir de l'intérieur du moyen de réception 2, dans lequel se trouvent les aliments 100, sous les effets conjugués de la force de propulsion exercée à partir de la tuyère d'éjection 5A et de la force d'aspiration exercée au voisinage de l'ouïe d'aspiration 6A.

L'écran 7 forme ainsi un organe de déflexion du flux 4, agencé pour faire obstacle à un retour direct, en ligne droite, de l'air présent au sein du moyen de réception 2 vers l'ouïe d'aspiration 6A.

Le principe général à la base de l'invention consiste donc à compliquer le passage du flux d'air 4 des aliments 100 vers l'ouïe d'aspiration 6A, en rendant la trajectoire du flux d'air 4 suffisamment sinueuse pour, notamment, prolonger autant que possible le temps de résidence au sein du moyen de réception 2 de l'air chaud 4A soufflé à partir de la tuyère 5A, ce qui permet de favoriser un excellent échange thermique entre les aliments 100 et le flux d'air 4.

La mise en oeuvre spécifique d'une trajectoire de contournement autour de l'écran 7 permet en outre de favoriser l'établissement de mouvements d'air turbulents, qui contribuent à l'effet technique recherché d'optimisation de la cuisson.

De façon préférentielle, l'écran 7 est formé par une paroi de déviation 7A du flux 4, paroi interposée sur et à l'encontre de la trajectoire du flux d'air 4 entre lesdites sortie 5 et entrée 6.

L'air du flux 4 est ainsi conduit à cheminer au moins partiellement le long d'une première face de la paroi 7A formant l'écran 7, puis à faire demi-tour au niveau de l'arête terminale de ladite paroi pour ensuite cheminer en sens inverse sur et le long d'au moins une portion de la face opposée de la paroi. Bien évidemment, l'écran 7 peut être formé par tout autre moyen technique qu'une paroi, panneau, volet ou aile de déviation, dans la mesure où le moyen alternatif employé permet bien de réaliser la fonction de contournement recherchée, de manière à favoriser un échange thermique approfondi entre d'une part les aliments 100 et le moyen de réception 2, et d'autre part, le flux d'air 4.

Avantageusement, la paroi de déviation 7A présente un caractère sensiblement non ajouré, c'est-à-dire en d'autres termes une structure sensiblement pleine, de façon à empêcher qu'une majeure partie du flux d'air 4 ne la traverse directement pour rejoindre l'entrée 6. Ainsi, l'écran 7 présente un caractère sensiblement imperméable au flux d'air 4, de sorte que ce dernier est dans l'incapacité de traverser directement l'écran 7, mais est forcé de contourner ce dernier.

De façon particulièrement avantageuse, le moyen de réception 2 des aliments 100 comprend un récipient 2A (visible sur les figures 2 et 3), ledit récipient 2A comprenant préférentiellement d'une part un fond 2B sur lequel les aliments 100 sont destinés à reposer, tel que cela est illustré à la figure 3, et d'autre part une paroi latérale 2C s'étendant à partir du fond 2B entre ledit fond 2B et un bord supérieur 2D.

Selon le mode de réalisation de la figure 3, le fond 2B présente sensiblement une forme discoïde, tandis que la paroi latérale 2C présente une forme annulaire et s'étend verticalement à partir dudit fond 2B à la périphérie de ce dernier, pour former avec le fond 2B un réceptacle présentant une ouverture supérieure d'introduction d'aliments délimitée par le bord supérieur 2D.

Selon le mode de réalisation illustré à la figure 2, le récipient 2A comprend un fond 2B présentant une forme de couronne annulaire sensiblement plane, couronne annulaire à partir de la périphérie interne et externe de laquelle s'élèvent, en vis-à-vis, une paroi latérale externe 20C et une paroi latérale interne 21C, de telle sorte que le récipient 2A présente sensiblement une forme générale de canal annulaire, ledit canal présentant une symétrie de révolution d'axe vertical X-X'. En d'autres termes, selon la variante de la figure 2, le récipient 2A présente globalement une forme toroïdale, générée par la rotation autour de l'axe de symétrie X-X' d'un profil ouvert sensiblement en forme de U.

De préférence, le récipient 2A définit un volume de réception 2E ouvert, c'est-à-dire délimité uniquement par le fond 2B et la paroi latérale 2C, sans élément de couvercle disposé sur le rebord 2D à l'opposé du fond 2B, ledit volume de réception 2E étant avantageusement destiné à accueillir et contenir à la fois les aliments et de la matière grasse, même lorsque cette dernière est liquide (cas d'une huile par exemple).

Avantageusement, l'écran 7 comprend le récipient 2A. En d'autres termes, le récipient 2A contribue lui-même directement à former tout ou partie de l'écran 7, c'est-à-dire qu'il assure une double fonction d'accueil des aliments 100 d'une part et de réalisation de l'écran 7 à contourner pour le flux d'air 4 d'autre part. L'écran 7 appartient ainsi au récipient 2A, l'écran 7 et le récipient 2A étant de préférence confondues, c'est-à-dire qu'ils ne forment qu'une seule et même pièce.

Dans cette variante préférentielle, ce sont donc le fond 2B et la paroi latérale 2C qui forment au moins en partie l'écran 7 à contourner, le flux d'air 4 étant en effet obligé, lorsqu'il se trouve au fond du récipient 2A, de remonter le long de la paroi latérale 2C avant de redescendre de l'autre côté de cette paroi latérale 2C pour rejoindre ensuite l'ouïe d'aspiration 6A, laquelle est positionnée de préférence à une altitude sensiblement inférieure ou égale à celle du fond 2B.

Afin que le récipient 2A puisse pleinement assurer sa fonction d'écran 7, la paroi latérale 2C dudit récipient est de préférence sensiblement non ajourée, au moins dans sa partie inférieure (c'est-à-dire à proximité de son raccordement avec le fond 2B) et de préférence sur toute sa hauteur, de façon à empêcher le flux d'air 4 de la traverser directement.

De même, le fond 2B du récipient est de préférence sensiblement non ajouré, et encore plus préférentiellement intégralement plein, afin d'empêcher là encore le flux d'air 4 de le traverser directement pour rejoindre l'ouïe d'aspiration 6A.

On peut noter toutefois que lorsque la quantité, la nature et la disposition des aliments 100 suffisent pour créer une barrière sensiblement infranchissable au flux d'air 4A, on pourra envisager de mettre en oeuvre un fond 2B présentant éventuellement des ajours, lesquels seraient dans ce cas obturés par les aliments 100 eux-mêmes.

Cependant, de manière préférentielle, le récipient 2A est conçu pour contenir à la fois les aliments 100, lesquels se présentent généralement sous forme solide, ainsi que de la matière grasse sous forme liquide ou semi-liquide. Le récipient 2A présente ainsi avantageusement une structure pleine, c'est-à-dire non ajourée, du moins dans la zone d'interface avec les aliments 100 et la matière grasse, afin d'éviter toute fuite de cette dernière hors du récipient 2A, à travers le fond 2B.

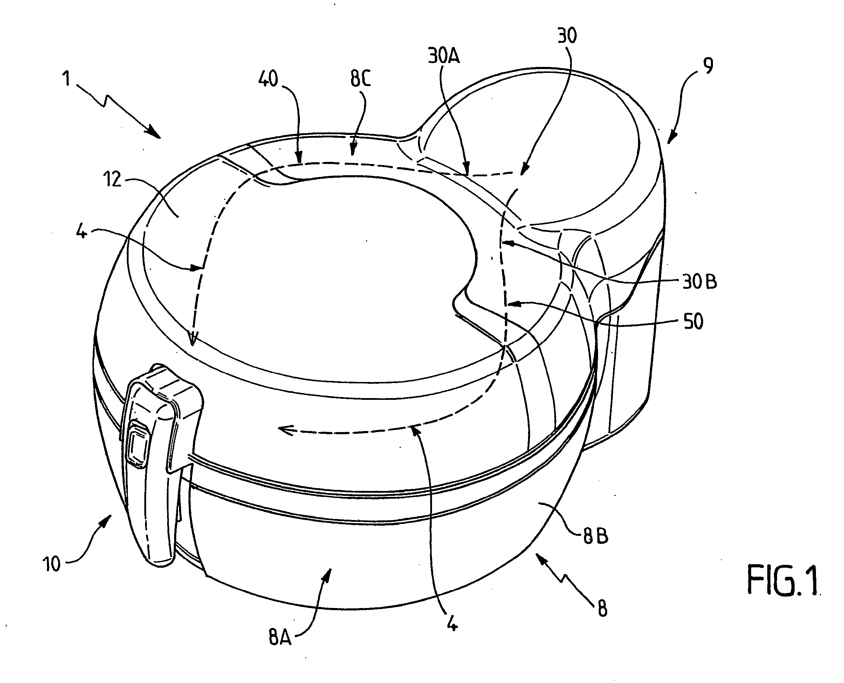

Ainsi, dans cette variante particulièrement avantageuse et qui est illustrée aux figures 1 à 3, l'effet technique recherché est obtenu avec un minimum de composants, puisqu'il repose simplement et essentiellement sur un positionnement et une conformation relatifs judicieux de la sortie 5, de l'entrée 6 et du récipient 2A.

De façon préférentielle, tel que cela est illustré à la figure 2, l'entrée d'air 6 est de préférence positionnée à une altitude sensiblement inférieure à celle du bord supérieur 2D, lorsque l'appareil 1 se trouve en position normale de fonctionnement.

Avantageusement, l'entrée d'air 6 est positionnée sensiblement sous et au voisinage du plan dans lequel s'étend le fond 2B du récipient 2A, de telle sorte que le flux d'air 4, pour rejoindre l'entrée d'aspiration 6, vient lécher sur son parcours le fond 2B, ce qui contribue à maintenir ledit fond 2B à une température élevée favorisant la cuisson des aliments 100.

Avantageusement, la sortie d'air 5 est positionnée au-dessus du moyen de réception 2A, de manière à déboucher sensiblement en direction des aliments 100, ou du moins en direction du volume de réception 2E défini par le récipient 2A.

De manière préférentielle, la tuyère d'éjection 5A formant la sortie 5 est disposée en regard de l'ouverture supérieure du récipient 2A délimitée par le bord supérieur 2D, de telle sorte qu'elle permet d'expulser de l'air 4A dans la direction de l'intérieur du récipient, le flux d'air 4A ainsi généré étant de préférence orienté selon une incidence sensiblement verticale descendante (cas de la variante de la figure 3), ou selon une incidence sensiblement oblique descendante (cas de la variante de la figure 2).

Préférentiellement, l'entrée d'air 6, qui est avantageusement formée par une ouïe d'aspiration 6A, débouche latéralement relativement au moyen de réception 2A, c'est-à-dire qu'elle débouche selon un axe Y-Y' sensiblement perpendiculaire à celui de l'axe de la sortie d'air 5 (cas de la variante de la figure 3), ou du moins selon un axe Y-Y' sécant avec l'axe de la sortie d'air 5 (cas de la variante de la figure 2).

Avantageusement, et de manière connue en soi, l'appareil 1 conforme à l'invention comprend un boîtier 8 destiné à accueillir en son sein les aliments 100 à cuire (c'est-à-dire à frire, dans les exemples illustrés aux figures).
Tel que cela est représenté aux figures, le boîtier 8 comprend une embase 8A destinée à former le socle de l'appareil 1, et conformée avantageusement pour reposer de façon stable sur un plan ou un support (par exemple le plateau d'une table de cuisine).

A partir de l'embase 8A et à la périphérie de cette dernière s'élève une jupe latérale 8B, réalisée par exemple en un matériau métallique ou en un matériau plastique, et formant l'enveloppe externe de l'appareil 1. La jupe latérale 8B peut présenter toute forme géométrique appropriée d'un point de vue fonctionnel et esthétique. Par exemple, dans le cas des friteuses représentées aux figures, la jupe 8B présente, vue de dessus, une forme globalement en « *8* », le sommet du « *8* » définissant l'arrière 9 de la friteuse 1, tandis que la base du « *8* » définit l'avant 10 de ladite friteuse 1.

Avantageusement, le boîtier 8 comporte également un couvercle 8C, positionné relativement à l'embase 8A de telle sorte que la jupe latérale 8B s'étende entre l'embase 8A et le couvercle 8C pour délimiter un compartiment 8D, au sein duquel est monté le moyen de réception 2, tel que cela est plus particulièrement visible sur les figures 2 et 3.

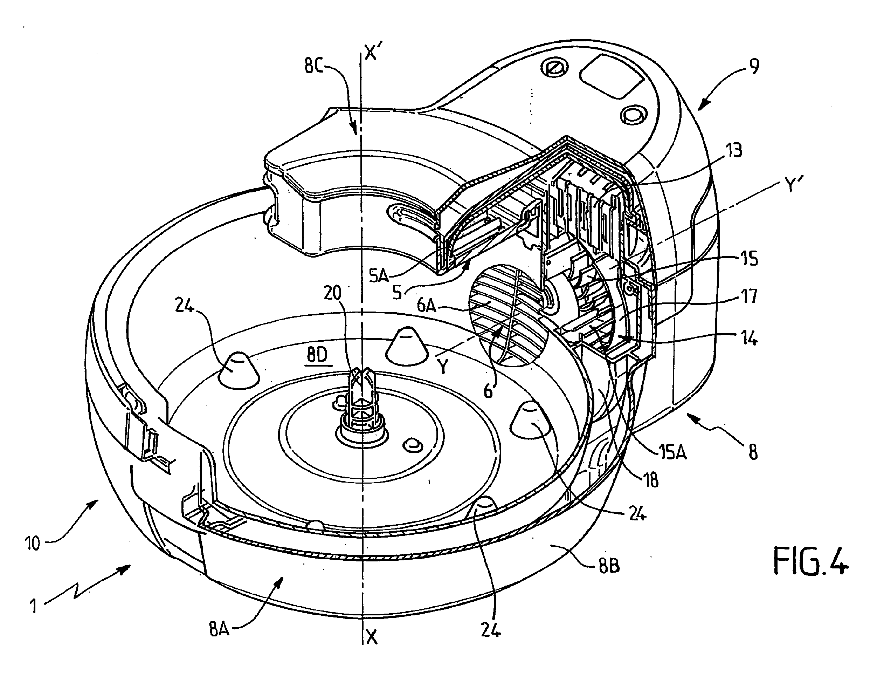

De manière préférentielle, tel que cela est illustré aux figures 2 à 5, le boîtier 8, et plus particulièrement l'embase 8A, comporte des bossages 24 sur lesquels est destiné à reposer le récipient 2A. Les bossages 24 forment ainsi préférentiellement un organe de séparation entre d'une part le fond 2B du récipient 2A et d'autre part l'embase 8A, organe de séparation permettant de délimiter un espace interstitiel 22 permettant une circulation d'air sous le fond 2B.

Le compartiment 8D et le récipient 2A sont de préférence conformés l'un relativement à l'autre pour qu'il subsiste un espace interstitiel 21 entre la paroi latérale 2C et la jupe 8B, ledit espace interstitiel 21 permettant une circulation d'air à l'extérieur du récipient 2A, le long de la paroi latérale 2C.

Avantageusement, le couvercle 8C est monté mobile entre d'une part une position de fermeture (représentée aux figures), dans laquelle le couvercle 8C forme avec l'embase 8A et la jupe latérale 8B une enceinte sensiblement fermée autour des aliments à frire, lesquels reposent dans le récipient 8A, et d'autre part une position d'ouverture (non représentée), autorisant l'introduction des aliments à frire au sein du boîtier, dans le récipient 8A.

En d'autres termes, le couvercle 8C forme, en coopération avec la jupe 8B et l'embase 8A, un boîtier sensiblement clos, c'est-à-dire de préférence sensiblement hermétique, autorisant une cuisson en atmosphère fermée (aux fuites résiduelles près). La fermeture sensiblement étanche de l'appareil peut être réalisée, au niveau du couvercle 8C, par exemple par l'intermédiaire de joints d'étanchéité (non représentés).

Tel que cela est représenté aux figures, le couvercle 8C est avantageusement monté en rotation relativement au reste du boîtier 8, par exemple grâce à une liaison pivot élastique réalisée par une charnière 11 munie d'un ressort de torsion 11A, de telle sorte que la position d'ouverture du couvercle 8C est également une position de rappel. Ladite charnière 11 est par ailleurs de préférence positionnée en périphérie de l'appareil 1, par exemple au voisinage de l'arrière 10 de l'appareil 1, tel que cela est représenté notamment aux figures 2 et 3.

Avantageusement, et tel que cela est illustré à la figure 1, le couvercle 8C pourra être pourvu d'une zone transparente de vision 12, réalisée par exemple en verre, de façon à permettre de surveiller l'évolution de la friture à l'intérieur de l'appareil 1 pendant le cycle de cuisson, lorsque le couvercle 8C est en position fermée.

Avantageusement, le moyen de réception 2 est monobloc, c'est-à-dire qu'il présente un caractère unitaire, et qu'il est formé de préférence d'une seule pièce. De manière préférentielle, afin de remplir sa fonction de contenance d'aliments et de matière grasse, le moyen de réception 2 est également non ajouré, à la différence d'un panier par exemple, pour éviter toute fuite de matière grasse.

Avantageusement, tel que cela est illustré en particulier à la figure 2, la sortie d'air 5 et l'entrée d'air 6 débouchent dans le compartiment 8D au niveau respectivement du couvercle 8C et de la jupe 8B. En d'autres termes, la sortie 5 est ménagée de préférence dans le couvercle 8C (cf. figures 2 et 3), tandis que l'entrée 6 est ménagée dans la jupe latérale 8B (cf. figure 2 et 3).

Dans un mode préférentiel de réalisation, qui correspond à celui illustré aux figures, le moyen de génération 3 du flux d'air 4 est conçu pour assurer une circulation d'air en circuit fermé au sein de l'appareil 1. Le flux d'air 4 est donc de préférence un flux recyclé, sensiblement non régénéré. En d'autres termes, la friteuse 1 travaille en ambiance sensiblement fermée, de l'air présent à l'intérieur du compartiment 8D étant prélevé au niveau de l'ouïe d'aspiration 6A pour être chauffé, puis propulsé sur les aliments à partir de la tuyère d'éjection 5A. Cet air chaud propulsé se refroidit au contact des aliments 100, puis est à nouveau prélevé pour être réchauffé et ainsi de suite.

Avantageusement, le moyen de chauffe comprend un élément calorifique 13 pour chauffer l'air destiné à être soufflé à partir de la sortie d'air 5, de telle sorte que l'air 4A éjecté à partir de la tuyère d'éjection 5A vers les aliments 100 est un air chaud. Ainsi, le moyen de génération d'un flux d'air mis en oeuvre dans le cadre de l'invention est préférentiellement un moyen de génération d'un flux d'air chaud, c'est-à-dire d'un flux d'air de température suffisante pour assurer la fonction de cuisson et/ou de chauffage recherchée, en fonction des aliments concernés.

Il est toutefois envisageable, sans pour autant que l'on sorte du cadre de l'invention, que le flux d'air 4A ne soit pas un flux d'air chaud, mais plus simplement un moyen de mise en mouvement de l'atmosphère régnant au sein du compartiment 8D, laquelle atmosphère peut être chauffée par ailleurs à l'aide de moyens distincts.

Avantageusement, le moyen de génération 3 du flux d'air 4 comprend un moyen d'entraînement d'air 14 disposé en communication aéraulique entre l'entrée 6 et la sortie d'air 5, ledit moyen d'entraînement 14 étant conçu pour assurer à la fois, et de préférence sensiblement simultanément, une aspiration d'air par l'entrée 6 et un refoulement de cet air aspiré par la sortie 5.

De préférence, le moyen d'entraînement d'air 14 comprend un ventilateur centrifuge 15 agencé pour générer un flux aéraulique en aspirant de l'air au sein du compartiment 8D par l'ouïe d'aspiration 6A et en refoulant cet air dans un dispositif de canalisation 30 se terminant par la tuyère d'éjection 5A, laquelle débouche en direction et au-dessus des aliments 100 présents dans le boîtier 8.

L'élément calorifique 13 est de préférence positionné au sein du flux aéraulique généré par le ventilateur 15, de préférence à l'aval du ventilateur 15 et à l'amont de la tuyère de sortie 5A dans le sens du flux 4, de façon à transformer le flux d'air en flux d'air chauffant.

Avantageusement, l'élément calorifique 13 comprend un système de résistance électrique avec des bandes résistives et/ou des fils résistifs maintenu(e)s sur un support isolant, ce qui s'avère être une solution économique en terme de place et performante en terme de rendement. De façon préférentielle, les bandes résistives et/ou les fils résistifs sont placés(e)s dans le flux aéraulique en fonction de la distribution de la vitesse d'air au sein du flux, de façon à éviter tout point chaud. La puissance de ce système de résistance électrique est de plus déterminée pour assurer un chauffage rapide des aliments sans les dessécher. De façon préférentielle, ladite puissance est sensiblement comprise entre 1 000 et 2 000 Watts, et plus préférentiellement entre 1 200 et 1 400 Watts.

On notera également qu'un filtre peut être prévu à l'amont du ventilateur centrifuge 15, par exemple au niveau de l'ouïe 6A.

Dans la variante de la figure 3, le dispositif de canalisation 30 comprend un conduit unique, débouchant sur une tuyère d'éjection 5A également unique, de sorte que le flux d'air 4A est propulsé selon une veine de fluide unique.

Bien entendu, l'invention n'est pas limitée à un nombre particulier de veines de fluide, et il est en particulier tout à fait envisageable que le flux d'air chauffant 4A comprenne non pas une seule veine, mais deux veines ou plus.

Ainsi, la variante des figures 1 et 2 met en oeuvre deux veines distinctes d'air chaud 40, 50 qui convergent de façon sensiblement symétrique, de manière opposée (cf. figure 1). Selon cette variante (illustrée aux figures 1 et 2), le dispositif de canalisation 30 se subdivise en deux conduits 30A, 30B selon une forme sensiblement en Y, à l'aval du moyen calorifique 13 dans le sens du flux 4. Ces deux conduits 30A, 30B se terminent chacun par une tuyère correspondante 5A orientée de façon oblique relativement à l'axe X-X', vers l'avant 10 et le bas de la friteuse 1.

De manière préférentielle, le ventilateur centrifuge 15 comprend une turbine 15A entraînée en rotation selon un axe Y-Y' correspondant à l'axe de l'ouïe d'aspiration 6A, ledit axe Y-Y' étant sensiblement perpendiculaire à l'axe X-X' de symétrie du récipient 2A. La turbine 15A est de préférence entraînée en rotation par un moteur électrique 16 et est avantageusement insérée dans une volute formée d'un flasque arrière 17 rapporté sur un flasque avant 18.

Avantageusement, l'ensemble du circuit aéraulique mis en oeuvre par le moyen de génération 3 du flux d'air 4 est conçu et dimensionné pour que le flux d'air chaud 4A soufflé à partir de la tuyère d'éjection 5A arrive sur les aliments contenus dans le récipient 2A avec une vitesse sensiblement supérieure à 2 mètres/seconde, et de préférence sensiblement supérieure ou égale à 3 mètres/seconde. Le choix d'une telle vitesse minimale permet d'assurer la cuisson de manière optimale, en favorisant d'une part la création, à la surface des aliments, d'une enveloppe croustillante sans dessèchement de surface, et d'autre part une cuisson lente à coeur des aliments, de façon à leur conserver une consistance moelleuse.

Avantageusement, l'ensemble du circuit aéraulique est conçu pour que la température du flux d'air chaud soit sensiblement inférieure à 200°C au niveau des aliments, et de préférence inférieure à 180°C au niveau des aliments 100. Une température sensiblement supérieure aux limites précitées peut être source de mauvaises odeurs et ne permet pas nécessairement un gain significatif de temps de cuisson.

De manière préférentielle, le ventilateur centrifuge 15 est positionné à l'arrière 10 de l'appareil 1, et est monté sur l'embase 8A et/ou sur la jupe 8B (et non directement sur le couvercle 8C), ce qui permet de minimiser l'encombrement vertical de l'appareil 1 tout en permettant une manipulation aisée du couvercle 8C.

Il faut également noter que l'encombrement latéral de l'appareil 1 est également optimisé grâce à la mise en oeuvre d'un ventilateur de type centrifuge, qui permet d'assurer la fonction de génération de flux d'air dans un encombrement minimum, lequel dépend essentiellement de la taille du moteur électrique d'entraînement de la turbine.

Avantageusement, la friteuse 1 comporte, monté au sein du boîtier 8, un moyen pour enduire automatiquement les aliments à frire d'une pellicule de matière grasse, par brassage desdits aliments avec de la matière grasse.

En d'autres termes, contrairement aux dispositifs de l'art antérieur dans lesquels les aliments sont immergés dans un bain d'huile, dans l'appareil conforme à ce mode de réalisation de l'invention la friture est réalisée en recouvrant simplement la surface des aliments d'une mince couche d'huile ou de toute autre matière grasse alimentaire appropriée. Ainsi, la cuisson ne se fait pas dans un bain d'huile, lequel implique la présence d'une quantité importante de matière grasse entourant tout ou partie des aliments, mais bien grâce à une faible quantité d'huile formant un mince revêtement, de préférence sensiblement homogène, à la surface de chacun des aliments placés au sein du corps principal 2.

Ainsi que cela a été précisé précédemment, l'enduction de matière grasse est réalisée de manière automatique, c'est-à-dire sans nécessité d'une contribution essentielle et directe de l'utilisateur pour l'établissement de la pellicule de graisse à la surface des aliments. En d'autres termes, grâce à la présence, au sein du boîtier 8, d'un moyen pour enduire automatiquement les aliments d'une pellicule de matière grasse, l'utilisateur n'a qu'à se contenter d'introduire les aliments dans la friteuse 1, au sein du boîtier 8, puis d'activer la mise en oeuvre du moyen d'enduction automatique (dans la mesure où cette activation n'est pas elle-même automatique) pour que la friteuse 1 se charge elle-même directement, au sein du boîtier 8, d'enduire individuellement les aliments d'une fine couche de matière grasse, sans que l'utilisateur ne soit contraint de réaliser lui-même cette opération de façon manuelle.

Le terme « *brassage »* est ici relatif à l'action de brasser, c'est-à-dire de « *remuer en mêlant* ». Au sens de l'invention, l'enduction des aliments est donc obtenue en réunissant des aliments et de la matière grasse, et en les brassant pour recouvrir les aliments d'une pellicule de matière grasse.

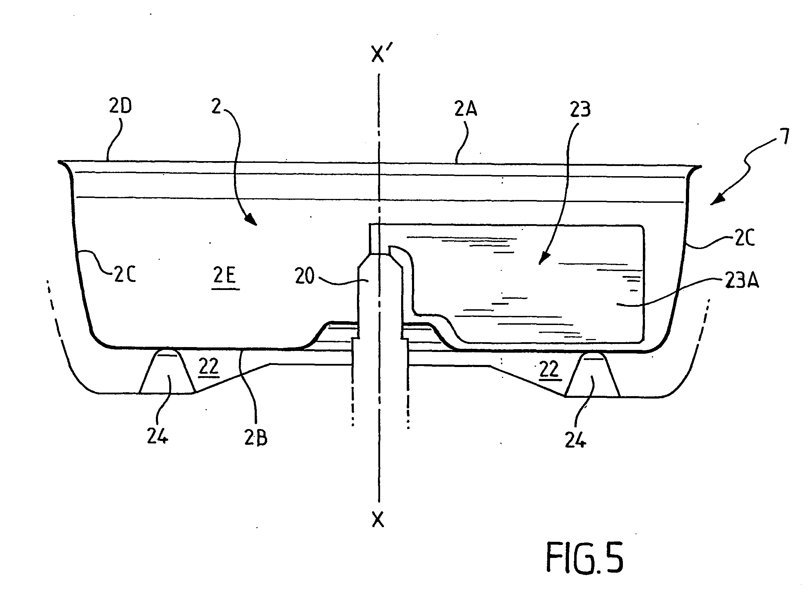

Avantageusement, le moyen pour enduire automatiquement les aliments d'une pellicule de matière grasse comprend d'une part le moyen de réception 2, lequel est conçu pour contenir, de préférence directement, à la fois les aliments à frire et de la matière grasse, notamment lorsque cette dernière se présente sous forme liquide (huile ou graisse fondue), et d'autre part un moyen de remuage 23 (représenté uniquement sur les figures 2 et 5) des aliments contenus dans le moyen de réception 2.

Avantageusement, le moyen de réception 2 et le moyen de remuage 23 sont distincts.

Conformément à l'invention, le moyen de réception 2 et le moyen de remuage 23 sont conçus pour être mis en mouvement l'un par rapport à l'autre, de façon à brasser et remuer les aliments et la matière grasse au sein du moyen de réception 2, afin de recouvrir sensiblement chaque aliment 100 d'une pellicule sensiblement uniforme, homogène et continue de matière grasse.

Dans le cas de la variante illustrée aux figures 3 à 5, le moyen de remuage 23 est monté mobile à rotation relativement au boîtier 8 et au moyen de réception 2, tandis que le moyen de réception 2 est lui-même monté immobile en position relativement au boîtier 8 et au moyen de remuage 6, et d'autre part relié fonctionnellement à un moyen moteur pour être entraîné en rotation par ce dernier.

Il est néanmoins tout à fait envisageable, sans pour autant sortir du cadre de l'invention, que la friteuse 1 mette en oeuvre un moyen de remuage 23 monté immobile en position alors que le moyen de réception 2 est monté mobile en rotation relativement au boîtier 8 et au moyen de remuage 6. Tel est d'ailleurs le cas dans la variante de réalisation de l'invention illustrée aux figures 1 et 2.

Dans ce cas, l'entraînement en rotation du moyen de remuage 23 est de préférence effectué à l'aide d'un second moteur électrique 19 pourvu d'un arbre de sortie 20 s'étendant de façon sensiblement coaxiale à l'axe X-X', arbre de sortie 20 sur lequel est monté le moyen de remuage 23 (cas de la variante des figures 3 à 5) ou le moyen de réception 2 (cas de la variante des figures 1 et 2). Dans les exemples de réalisation illustré aux figures 2 et 3, le second moteur électrique 19 est installé dans un logement ménagé dans l'embase 8A.

De manière préférentielle, le moyen de remuage 23 comprend une pale 23A fixe (variante des figures 1 et 2) ou rotative (variante des figures 3 à 5) disposée au sein du volume interne 2E délimité par le récipient 2A, de façon à assurer la mise en mouvement des aliments présents dans le récipient 2A.

Dans le cas préférentiel de la variante des figures 3 à 5, une fois les aliments 100 et la matière grasse disposés (manuellement et/ou automatiquement) dans le récipient 2A, la pale 23A est mise en rotation à l'aide du second moteur électrique 19 et de l'arbre 20, ce qui contribue à retourner et brasser les aliments et la matière grasse, réalisant ainsi l'enduction rapide et sensiblement uniforme desdits aliments 100.

La pale 23A est de préférence réalisée en un matériau présentant de bonnes propriétés de glissement. La pale 23A peut avantageusement être revêtue d'un matériau anti-adhésif, par exemple du polytétrafluoroéthylène (PTFE), ou encore être réalisée en acier inoxydable (inox) ou en polyamide 4-6.

Avantageusement, la pale 23A est également montée de façon amovible sur le corps principal 2.

Avantageusement, le moyen de remuage 23 des aliments 100 est également conçu pour favoriser une soumission sensiblement uniforme desdits aliments 100 au flux d'air 4.

En d'autres termes, le moyen de remuage 23 assure avantageusement une double fonction, à savoir une fonction d'enduction des aliments 100 par de la matière grasse d'une part et de déplacement des aliments 100 dans le flux d'air 4 de façon à ce que ledit flux vienne s'appliquer de manière sensiblement homogène sur chacun des aliments et de préférence sensiblement sur toute la surface de ce dernier.

La mise en oeuvre d'un tel moyen de remuage 23 s'avère particulièrement importante dans le cas où le flux d'air chaud 4A issu de la sortie 5 n'est pas orienté coaxialement à l'axe de symétrie du récipient 2A mais est au contraire décalé radialement relativement audit axe X-X', tel que cela est illustré à la figure 3 par exemple.

Ainsi, dans le cas où le moyen de remuage 23 comprend une pale 23A montée rotative relativement au moyen de réception 2 pour déplacer les aliments 100 reçue dans ledit moyen de réception 2 (cf. figure 5), ladite pale 23A assure une double fonction puisqu'elle contribue simultanément à enduire les aliments à frire d'une pellicule de matière grasse et à pousser et retourner lesdits aliments dans le flux d'air 4 pour assurer leur cuisson uniforme.

Afin d'améliorer encore les qualités de cuisson de la friteuse 1 conforme à l'invention, il est intéressant de pourvoir la face interne du récipient 2A, destinée à être en regard des aliments, d'un revêtement à base d'un matériau constitué majoritairement de silicone. En particulier, il est intéressant de recouvrir la face supérieure du fond 2B du récipient 2A d'un revêtement de silicone. En effet le silicone, grâce à ses propriétés de microporosité, présente des qualités spécifiques de réaction avec la matière grasse (émulsion) qui permettent d'obtenir une meilleure répartition de l'huile sur les aliments tout en conservant un excellent coefficient de frottement, ce qui s'avère utile pour la préservation de l'intégrité des aliments lors de l'enduction par brassage, par exemple à l'aide d'une pale. En outre, un tel plat siliconé a la faculté de chauffer les frites qui sont à son contact, sans les brûler ou les surcolorer comme le ferait un plat métallique par exemple. La demanderesse a ainsi constaté que les propriétés de transfert par conduction entre des frites et un plat siliconé sont sensiblement comparables aux propriétés de transfert par convection forcée de l'air chaud sur les frites. Grâce à une telle enduction de silicone, l'uniformité de cuisson est assurée en évitant en particulier tout brunissage des pointes de frites.

Il est également envisageable que tout ou partie de la face interne du récipient 2A soit revêtue d'un matériau constitué majoritairement de polytétrafluoroéthylène (PTFE), matériau qui présente d'excellente propriétés thermiques et tribologiques.

Il est toutefois envisageable que le récipient 2A soit simplement réalisé à partir d'acier inoxydable, sans revêtement particulier.

Avantageusement, la friteuse 1 conforme à l'invention forme, en fonctionnement (c'est-à-dire lorsque le couvercle est fermé), une enceinte de cuisson sensiblement close autour du moyen de réception 2, c'est-à-dire de préférence fermée de façon étanche, ladite enceinte pouvant également de préférence être munie d'un moyen de fuite calibrée de vapeur vers l'extérieur (non représenté).

Cette mesure technique permet de contrôler l'hygrométrie régnant au sein de l'enceinte.

A cette fin, le moyen de fuite calibrée de vapeur est dimensionné de façon à :
- éviter une cuisson à l'étouffée, qui aurait lieu si l'enceinte était complètement étanche et qui pourrait provoquer une casse des frites,
- favoriser une consommation économe en énergie, car si l'échappement de vapeur est trop important, cela conduit à une dissipation d'énergie elle aussi importante, qui nécessite de surdimensionner l'élément calorifique 30.

De façon préférentielle, le moyen de fuite calibrée de vapeur comprend un orifice de fuite (non représenté), disposé de préférence au voisinage de l'ouïe d'aspiration 6A, ce qui permet une évacuation contrôlée en continu de la vapeur tout au long du cycle de cuisson, ainsi qu'un renouvellement contrôlé de l'air à l'intérieur de l'enceinte.

On va maintenant décrire un exemple d'utilisation de la friteuse 1 conforme à l'invention, et plus particulièrement de la friteuse 1 correspondante à la variante illustrée aux figures 3 à 5.

Dans cet exemple, l'utilisateur de l'appareil 1 se propose de frire 1 kg de morceaux 100 de pommes de terre fraîches coupées manuellement.

Pour cela, l'utilisateur ouvre le couvercle 8C de l'appareil 1 et introduit les morceaux de pommes de terre 100 dans le récipient 2A, lesdits morceaux de pommes de terre 100 reposant sur le fond 2B du récipient 2A en question.

L'utilisateur introduit également une faible quantité d'huile (par exemple 30 g ou moins) dans le récipient 2A.

Du fait de la faible quantité d'huile mise en jeu, l'utilisateur peut utiliser une huile d'excellente qualité, qui peut s'avérer meilleure pour la santé et/ou le goût par rapport à une huile standard.

L'utilisateur referme ensuite le couvercle 8C de l'appareil, et enclenche le démarrage du cycle de cuisson en pressant par exemple sur un interrupteur.

Le cycle de cuisson démarre alors, ce qui engendre la rotation, autour de l'axe X-X', de la pale 23A montée solidaire de l'arbre 20, lequel passe à travers un orifice ménagé dans le fond 2B et est entraîné en rotation par le moteur 19. Cette rotation de la pale 23A engendre le brassage des morceaux de pommes de terre 100 et de l'huile répandus dans le récipient 2A. Ce brassage conduit à l'établissement d'une pellicule d'huile à la surface de chaque morceau 100 de pomme de terre.

Simultanément, ou éventuellement après un temps de latence prédéterminé, le ventilateur centrifuge 15 et l'élément calorifique 13 sont mis en route, ce qui conduit à l'établissement du flux d'air chaud 4 qui vient chauffer directement les morceaux de pommes de terre 100 enduits d'huile.

Le récipient 2A fait donc office de chambre de cuisson.

La friture s'effectue par chauffage direct des aliments à l'aide d'un flux d'air chaud et non, comme dans l'art antérieur, par immersion des aliments dans un bain de matière grasse chaude.

Le flux d'air chaud 4 circule au sein de l'appareil 1 selon le cycle suivant :
- Le ventilateur 15 propulse vers et dans l'élément calorifique 13 un premier tronçon de flux 4B.
- Ce premier tronçon de flux 4B se transforme, par passage à travers l'élément calorifique 13, en un second tronçon de flux d'air chaud 4C, lequel va se diriger au sein du conduit 30 et sous l'effet de l'entraînement du ventilateur 15 jusqu'à la tuyère d'éjection 5A.
- Ce flux d'air chaud est ainsi propulsé, à partir de la tuyère 5A, sous la forme d'un troisième tronçon 4A, formée en l'occurrence par une veine d'air chaud unique, en direction des aliments 100, dans le récipient 2A.
- Le flux d'air chaud circule ainsi au niveau des aliments 100 sous la forme d'un quatrième tronçon 4D destiné à chauffer lesdits aliments. Sous l'effet du contact avec les aliments 100, le tronçon 4D transmet sa chaleur aux aliments 100 pour les frire.
- Le tronçon 4D est évacuée hors du récipient 2A sous la forme d'un cinquième tronçon 4E qui remonte le long de la paroi latérale 2C à l'intérieur du récipient 2A, en léchant ladite paroi 2C jusqu'au sommet 2D de cette dernière, sommet au niveau duquel le cinquième tronçon 4E effectue un demi-tour pour se diriger vers le bas de l'appareil, dans l'espace interstitiel 21 ménagé entre la paroi latérale 2C et le boîtier 8.
- Le flux d'air chaud passe ensuite sous le fond 2B, sous la forme d'un sixième tronçon 4F, dans l'espace interstitiel 22 ménagé entre le fond 2B et le boîtier 8 pour rejoindre la bouche d'aspiration 6A. Le tronçon 4F suit ainsi une trajectoire sensiblement parallèle au fond 2B et lèche la paroi de ce dernier, de préférence sensiblement sur toute sa surface.
- Parvenu à la bouche d'aspiration 6A, le tronçon de flux 4F est aspiré par le ventilateur 15 et est recyclé en un premier tronçon 4B.

Ainsi, l'écran 7 force le flux d'air 4 à effectuer un contournement à partir de l'intérieur du moyen de réception 2 pour rejoindre l'entrée d'air 6.

On voit ainsi que l'écran 7 formé par le récipient 2A, délimite, de préférence, en coopération avec le boîtier 8, des conduits de circulation pour le flux d'air 4, ces conduits étant agencés pour définir un parcours tortueux, avec des chicanes, pour le flux d'air 4, de façon à optimiser le transfert thermique entre le flux d'air 4 d'une part et les aliments 100 ainsi que le récipient 2A d'autre part.

Le mécanisme de cuisson est le suivant.

Dans une première phase du cycle de cuisson, l'air pulsé du flux 4 chauffe les morceaux de pommes de terre 100 de la couche supérieure, lesquels produisent rapidement de la vapeur d'eau. Cette vapeur d'eau, en se condensant sur les morceaux, plus froids, des couches inférieures, fait ainsi office d'échangeur de chaleur avec lesdits morceaux des couches inférieures. Ce mécanisme de cuisson dans une ambiance saturée en vapeur permet ainsi un chauffage rapide et homogène de l'ensemble des morceaux de pommes de terre présents dans le récipient 2A. Ce chauffage homogène est facilité par le brassage permanent des morceaux opéré par la pale. Les aliments sont ainsi soumis à un cycle de chauffe directe par le flux d'air chaud, puis de diffusion/absorption des calories à l'intérieur des aliments, puis à nouveau de chauffe directe par le flux d'air chaud, et ainsi de suite.

Les morceaux subissent une surchauffe lorsqu'ils sont sous le flux direct d'air, et absorbent la chaleur lorsqu'ils quittent cette zone, avant de subir une nouvelle surchauffe. Cette alternance permet une meilleure diffusion de la chaleur dans les aliments, et contribue à éviter un dessèchement excessif.

Il se crée ainsi, dans cette première phase du cycle, un équilibre entre évaporation et recondensation, jusqu'à ce que la vapeur d'eau ait été progressivement évacuée hors de la friteuse par le moyen de fuite calibrée.

Commence alors une deuxième phase de cuisson, lorsque le taux de vapeur a été sensiblement réduit. Durant cette deuxième phase, la température moyenne dans l'enceinte atteint sensiblement 160°C (alors qu'elle était d'environ 100-120°C au cours de la première phase) et la réaction de Maillard (coloration des frites) a lieu. Durant cette deuxième phase, le brassage des morceaux est poursuivi continûment à l'aide de la pale 16, afin d'homogénéiser la cuisson.

Le cycle de cuisson, qui aura duré, dans son intégralité, environ 30 minutes, se termine alors. L'utilisateur peut alors ouvrir le couvercle 8C et extraire le récipient 2A hors du boîtier 8. Le récipient 2A fait alors office de plat de service, et contient désormais des frites prêtes à servir dont le goût et l'aspect sont similaires aux frites fraîches cuites par immersion complète dans un bain d'huile.

### POSSIBILITE D'APPLICATION INDUSTRIELLE

L'invention trouve son application industrielle dans la conception, la fabrication et l'utilisation d'un appareil de cuisson d'aliments.

## Revendications

1. Appareil domestique (1) de cuisson et/ou de chauffage d'aliments (100) comprenant d'une part un moyen de réception (2) d'aliments en vrac (100) et d'autre part un moyen de chauffe desdits aliments en vrac (100) comportant un moyen de génération (3) d'un flux d'air (4), le moyen de génération (3) du flux d'air (4) comprenant d'une part une sortie d'air (5) à partir de laquelle de l'air (4A) est soufflé dans ledit moyen de réception (2), et d'autre part une entrée d'air (6) au niveau de laquelle est réalisée une aspiration d'air pour établir le flux d'air (4) entre lesdites sortie (5) et entrée (6), **caractérisé en ce que** l'entrée d'air (6) est distincte de la sortie d'air (5), la sortie d'air (5) étant positionnée au dessus du moyen de réception (2) de manière à déboucher sensiblement en direction des aliments (100), l'appareil (1) comprenant également un écran (7) agencé relativement à la sortie (5) et à l'entrée d'air (6) de manière à forcer le flux d'air (4) à effectuer un mouvement de contournement de l'écran (7) pour rejoindre l'entrée d'air (6) à partir du moyen de réception (2).

2. Appareil (1) selon la revendication 1 **caractérisé en ce que** la sortie d'air (5) est agencée relativement au moyen de réception (2) de telle sorte que l'air (4A) soufflé à partir de ladite sortie d'air (5) est projeté directement sur les aliments en vrac (100).

3. Appareil (1) selon la revendication 1 ou 2 **caractérisé en ce que** l'écran (7) est formé par une paroi de déviation du flux (4), interposée sur et à l'encontre de la trajectoire du flux d'air (4) entre lesdites sortie (5) et entrée (6).

4. Appareil (1) selon la revendication 3 **caractérisé en ce que** ladite paroi de déviation présente un caractère sensiblement non ajouré, de façon à empêcher qu'une majeure partie du flux d'air (4) ne la traverse directement pour rejoindre l'entrée (6).

5. Appareil (1) selon l'une des revendications 1 à 4 **caractérisé en ce que** le moyen de réception (2) des aliments (100) comprend un récipient (2A), l'écran (7) comprenant ledit récipient (2A).

6. Appareil (1) selon la revendication 5 **caractérisé en ce que** le récipient (2A) comprend d'une part un fond (2B) sur lequel les aliments (100) sont destinés à reposer, et d'autre part une paroi latérale (2C) s'étendant à partir du fond (2B) entre ledit fond (2B) et un bord supérieur (2D), l'entrée d'air (6) étant positionnée à une altitude sensiblement inférieure à celle du bord supérieur (2D).

7. Appareil (1) selon l'une des revendications 1 à 6 **caractérisé en ce que** le moyen de réception (2) est capable de contenir de la matière grasse liquide.

8. Appareil (1) selon l'une des revendications 1 à 7 **caractérisé en ce que** l'entrée d'air (6) débouche latéralement relativement au moyen de réception (2).

9. Appareil (1) selon l'une des revendications 1 à 8 **caractérisé en ce qu'**il comprend un boîtier (8), lequel comporte une embase (8A) et un couvercle (8C) entre lesquels s'étend une jupe latérale (SB) pour délimiter un compartiment (8D) au sein duquel est monté le moyen de réception (2), la sortie (5) et l'entrée d'air (6) débouchant dans le compartiment (8D) au niveau respectivement du couvercle (8C) et de la jupe (8B).

10. Appareil (1) selon l'une des revendications 1 à 9 **caractérisé en ce que** le moyen de génération (3) du flux d'air (4) est conçu pour assurer une circulation d'air en circuit fermé au sein de l'appareil (1).

11. Appareil (1) selon l'une des revendications 1 à 10 **caractérisé en ce que** le moyen de chauffe comprend un élément calorifique (13) pour chauffer l'air destiné à être soufflé à partir de la sortie d'air (5).

12. Appareil (1) selon l'une des revendications 1 à 11 **caractérisé en ce que** le moyen de génération (3) du flux d'air (4) comprend un moyen d'entraînement d'air (14) disposé en communication aéraulique entre l'entrée (6) et la sortie d'air (5), ledit moyen d'entraînement (14) étant conçu pour assurer à la fois une aspiration d'air par l'entrée (6) et un refoulement de cet air aspiré par la sortie (5).

13. Appareil (1) selon la revendication 12 **caractérisé en ce que** le moyen d'entraînement d'air (14) comprend un ventilateur centrifuge (15).

14. Appareil (1) selon l'une des revendications 1 à 13 **caractérisé en ce qu'**il comprend un moyen de remuage (23) des aliments, pour favoriser une soumission sensiblement uniforme des aliments (100) au flux d'air (4).

15. Appareil (1) selon la revendication 14 **caractérisé en ce que** le moyen de remuage comprend une pale (23A) montée rotative relativement au moyen de réception (2) pour déplacer les aliments (100) reçus dans ledit moyen de réception (2).

16. Appareil (1) selon l'une des revendications 1 à 15 **caractérisé en ce qu'**il est conçu et dimensionnée pour cuire et/ou chauffer des aliments (100) particulaires, tels que des morceaux de pommes de terre.

17. Appareil (1) selon l'une de revendications 1 à 16 **caractérisé en ce qu'**il constitue une friteuse à cuisson sèche.

## Claims

1. A household appliance (1) for cooking and/or heating food (100), which appliance comprises food-receiver (2) for receiving loose pieces of food (100), and heater means for heating said loose pieces of food (100), which heater means include generator means (3) for generating a flow of air (4), said generator means (3) for generating the flow of air (4) including an air outlet (5) from which air (4A) is blown into said food-receiver (2) and an air inlet (6) via which air is sucked in so as to set up the flow of air (4) between said outlet (5) and said inlet (6), said household appliance being **characterized in that** the air inlet (6) is distinct from the air outlet (5), the air outlet (5) being positioned above the food-receiver (2), so as to open out substantially towards the food (100), the appliance (1) further comprising a screen (7) arranged relative to the air outlet (5) and to the air inlet (6) so that it forces the flow of air (4) to go around the screen (7) in order to reach the air inlet (6) from the food-receiver (2).

2. An appliance (1) according to claim 1, **characterized in that** the air outlet (5) is arranged relative to the food-receiver (2) so that the air (4A) blown from said air outlet (5) is blasted directly onto the loose pieces of food (100).

3. An appliance (1) according to claim 1 or claim 2, **characterized in that** the screen (7) is formed by a deflector wall for deflecting the flow (4), which wall is interposed across the path of the flow of air (4) between said outlet (5) and said inlet (6).

4. An appliance (1) according to claim 3, **characterized in that** said deflector wall is substantially non-perforated, so as to prevent a large proportion of the flow of air (4) passing directly through it in order to reach the inlet (6).

5. An appliance (1) according to any one of claims 1 to 4, **characterized in that** the food-receiver (2) for receiving the food (100) comprise a receptacle (2A), the screen (7) comprising said receptacle (2A).

6. An appliance (1) according to claim 5, **characterized in that** the receptacle (2A) comprises a bottom (2B) on which it is intended for the food (100) to rest, and a side wall (2C) extending from the bottom (2B) to a top edge (2D), the air inlet (6) being positioned at a height that is significantly lower than the height at which the top edge (2D) is situated.

7. An appliance (1) according to any one of claims 1 to 6, said appliance being **characterized in that** the food-receiver (2) is designed to contain fat in liquid form.

8. An appliance (1) according to any one of claims 1 to 7, **characterized in that** the air inlet (6) opens out laterally relative to the food-receiver (2).

9. An appliance (1) according to any one of claims 1 to 8, **characterized in that** it further comprises a housing (8) that comprises a base (8A) and a lid (8C) between which a side skirt (8B) extends so as to define a compartment (8D) inside which the food-receiver (2) are mounted, the air outlet (5) and the air inlet (6) opening out into the compartment (8D) respectively at the lid (8C) and at the skirt (8B).

10. An appliance (1) according to any one of claims 1 to 9, **characterized in that** the generator means (3) for generating the flow of air (4) are designed to provide circulation of air in a closed circuit inside the appliance (1).

11. An appliance (1) according to any one of claims 1 to 10, **characterized in that** the heater means comprise a heat-generator element (13) for heating the air that is to be blown from the air outlet (5).

12. Apparatus (1) according to any one of claims 1 to 11, **characterized in that** the generator means (3) for generating the flow of air (4) comprise air drive means (14) disposed in air-flow communication between the air inlet (6) and the air outlet (5), said drive means (14) being designed both to suck in air via the inlet (6) and also to deliver the sucked-in air via the outlet (5).

13. An appliance (1) according to claim 12, **characterized in that** the air drive means (14) comprise a centrifugal fan (15).

14. An appliance (1) according to any one of claims 1 to 13, **characterized in that** it further comprises stirrer means (23) for stirring the food, so as to work in favor of subjecting the food (100) substantially uniformly to the flow of air (4).

15. An appliance (1) according to claim 14, **characterized in that** the stirrer means comprise a blade (23A) that is mounted to rotate relative to the food-receiver (2) so as to move the food (100) received in said food-receiver (2).

16. An appliance (1) according to any one of claims 1 to 15, **characterized in that** it is designed and dimensioned for cooking and/or heating a particular type of food (100), such as pieces of potato.

17. An appliance (1) according to any one of claims 1 to 16, **characterized in that** it constitutes a dry-fryer.

## Patentansprüche

1. Haushaltsgerät (1) zum Kochen und/oder Erhitzen von Lebensmitteln (100), das einerseits ein Mittel zur Aufnahme (2) von losen Lebensmitteln (100) und andererseits ein Mittel zur Erhitzung der losen Lebensmittel (100) umfasst, das ein Mittel zur Erzeugung (3) eines Luftstroms (4) umfasst, wobei das Mittel zu Erzeugung (3) des Luftstroms (4) einerseits einen Luftauslass (5), aus dem die Luft (4A) in das Aufnahmemittel (2) geblasen wird, und andererseits einen Lufteinlass (6) umfasst, mittels den ein Ansaugen von Luft durchgeführt wird, um den Luftstrom (4) zwischen dem Auslass (5) und dem Einlass (6) herzustellen, **dadurch gekennzeichnet, dass** der Lufteinlass (6) sich von dem Luftauslass (5) unterscheidet, wobei der Luftauslass (5) derart über dem Aufnahmemittel (2) angeordnet ist, dass er im Wesentlichen in Richtung der Lebensmittel (100) mündet, wobei das Gerät (1) außerdem einen Schirm (7) umfasst, der derart in Bezug auf den Luftauslass (5) und den Lufteinlass (6) angeordnet ist, dass der Luftstrom (4) dazu gebracht wird, eine Bewegung zur Umgehung des Schirms (7) vorzunehmen, um wieder auf den Lufteinlass (6) von dem Aufnahmemittel (2) zu treffen.

2. Gerät (1) nach Anspruch 1, **dadurch gekennzeichnet, dass** der Luftauslass (5) in Bezug auf das Aufnahmemitte (2) derart angeordnet ist, dass die aus dem Luftauslass (5) geblasene Luft (4a) direkt auf die losen Lebensmittel (100) gerichtet wird.

3. Gerät (1) nach Anspruch 1 oder 2, **dadurch gekennzeichnet, dass** der Schirm (7) von einer Wand zur Ablenkung des Stroms (4) gebildet wird, die in und entgegen der Bahn des Luftstroms (4) zwischen dem Auslass (5) und dem Einlass (6) eingeschoben ist.

4. Gerät (1) nach Anspruch 3, **dadurch gekennzeichnet, dass** die Ablenkungswand einen im Wesentlichen nicht perforierten Charakter aufweist, um so einen Großteil des Luftstroms (4) daran zu hindern, direkt durch diese hindurchzuströmen, um wieder auf den Einlass (6) zu treffen.

5. Gerät (1) nach einem der Ansprüche 1 bis 4, **dadurch gekennzeichnet, dass** das Mittel zur Aufnahme (2) von Lebensmitteln (100) einen Behälter (2A) umfasst, wobei der Schirm (7) den Behälter (2A) umfasst.

6. Gerät (1) nach Anspruch 5, **dadurch gekennzeichnet, dass** der Behälter (2A) einerseits einen Boden (2B), auf dem die Lebensmittel (100) lagern sollen, und andererseits eine Seitenwand (2C) umfasst, die sich von dem Boden (2B) zwischen dem Boden (2B) und einer Oberkante (2D) erstreckt, wobei der Lufteinlass (6) in einer Höhe angeordnet ist, die im Wesentlichen unter der der Oberkante (2D) liegt.

7. Gerät (1) nach einem der Ansprüche 1 bis 6, **dadurch gekennzeichnet, dass** das Aufnahmemittel (2) flüssiges Fett enthalten kann.

8. Gerät (1) nach einem der Ansprüche 1 bis 7, **dadurch gekennzeichnet, dass** der Lufteinlass (6) in Bezug auf das Aufnahmemittel (2) seitlich mündet.

9. Gerät (1) nach einem der Ansprüche 1 bis 8, **dadurch gekennzeichnet, dass** es ein Gehäuse (8) umfasst, das ein Unterteil (8A) und einen Deckel (8C) umfasst, zwischen denen sich eine seitliche Schürze (8B) erstreckt, um eine Kammer (8D) abzugrenzen, in der das Aufnahmemittel (2) angebracht ist, wobei der Luftauslass (5) und der Lufteinlass (6) in der Kammer (8D) auf Höhe des Deckels (8C) bzw. der Schürze (8B) münden.

10. Gerät (1) nach einem der Ansprüche 1 bis 9, **dadurch gekennzeichnet, dass** das Mittel zur Erzeugung (3) des Luftstroms (4) dazu ausgelegt ist, eine Luftzirkulation in einem geschlossenen Kreislauf in dem Gerät (1) sicherzustellen.

11. Gerät (1) nach einem der Ansprüche 1 bis 10, **dadurch gekennzeichnet, dass** das Erhitzungsmittel ein Wärmeelement (13) umfasst, um die Luft zu erhitzen, die von dem Luftauslass (5) ausgeblasen werden soll.

12. Gerät (1) nach einem der Ansprüche 1 bis 11, **dadurch gekennzeichnet, dass** das Mittel zur Erzeugung (3) des Luftstroms (4) ein Luftantriebsmittel (14) umfasst, das in pneumatischer Verbindung zwischen dem Lufteinlass (6) und dem Luftauslass (5) angeordnet ist, wobei das Antriebsmittel (14) dazu ausgelegt ist, gleichzeitig ein Luftansaugen durch den Einlass (6) und ein Fördern dieser angesaugten Luft durch den Auslass (5) sicherzustellen.

13. Gerät (1) nach Anspruch 12, **dadurch gekennzeichnet, dass** das Luftantriebsmittel (14) einen Kreisellüfter (15) umfasst.

14. Gerät (1) nach einem der Ansprüche 1 bis 13, **dadurch gekennzeichnet, dass** es ein Mittel zur Umrührung (23) von Lebensmitteln umfasst, um eine im Wesentlichen gleichmäßige Aussetzung der Lebensmittel (100) gegenüber dem Luftstrom (4) zu begünstigen.

15. Gerät (1) nach Anspruch 14, **dadurch gekennzeichnet, dass** das Umrührmittel eine Schaufel (23A) umfasst, die drehbar in Bezug auf das Aufnahmemittel (2) angebracht ist, um die in dem Aufnahmemittel (2) aufgenommenen Lebensmittel (100) zu bewegen.

16. Gerät (1) nach einem der Ansprüche 1 bis 15, **dadurch gekennzeichnet, dass** es dazu ausgelegt und bemessen ist, bestimmte Lebensmittel (100) zu kochen und/oder zu erhitzen, wie Kartoffelstücke.

17. Gerät (1) nach einem der Ansprüche 1 bis 16, **dadurch gekennzeichnet, dass** es in einer Trocken-Friteuse besteht.
